# EUROPEAN PATENT APPLICATION

(11) **EP 3 020 997 A1**
(43) Date of publication of application: **18.05.2016**
(21) Application number: 15177638.2
(22) Date of filing: 21.07.2015
(51) Int. Cl.: F16D 65/12

(54) **BRAKE DISC MOUNTING ARRANGEMENT**

(30) Priority: 24.07.2014 US 201414339857
(71) Applicant: Bendix Spicer Foundation Brake LLC, Elyria, OH 44035 (US)
(72) Inventor: PLANTAN, Ronald, Elyria, OH Ohio 44035 (US); WOLF, Dennis, Elyria, OH Ohio 44035 (US)
(74) Representative: Kleine, Hubertus

(57) **Abstract**

An arrangement for mounting a brake disc (5) to an axle hub (4) of a vehicle is provided. The arrangement includes mounting rings (18) and may include bushing blocks (14) interposed between an axle hub and a brake disc in a manner that permits transfer of braking forces from the brake disc to the axle hub while minimizing heat transfer from the disc to the hub.

## Description

### BACKGROUND AND SUMMARY OF THE INVENTION

The present invention relates to disc brakes for vehicles, and in particular to an arrangement for connecting a brake disc to an axle hub, including axle hubs utilized on commercial vehicles such as tractor-trailer trucks, box trucks, buses, and the like.

Disc brakes are increasing being used on commercial vehicles, replacing conventional drum brakes. Due to the very high braking forces (aka braking loads) generated when the disc brake's caliper applies the brake pads to the brake disc to slow such heavy vehicles, very robust and often complicated designs have been required to connect the brake disc of a disc brake to transfer the braking forces from the brake disc to the axle hub on which the brake disc is mounted. The design of the brake disc-to-hub connection is further complicated by the heat generated during braking as the kinetic energy of the vehicle is converted into heat energy by application of the brake pads to the brake disc. The heat can be detrimental to the axle hub and its components (such as bearings and seals), as well as other adjacent components that may receive heat from the axle hub as the hub receives and dissipates the heat received from the brake disc.

Commercial vehicle brake discs, also referred to as "brake rotors" or "rotors," often are mounted onto axle hubs using so-called spline arrangements using a fixed or floating connection, such as taught in U.S. Patent Nos. 6,626,273 and 7,410,036. One example is the Splined Disc® brake assembly from Bendix Spicer Foundation Brake LLC. These types of brakes typically are mounted on an axle hub having a plurality of axially-oriented splines arranged around an outer circumference of a disc-mounting region of the hub. The brake disc has corresponding radially-inward facing tabs about the inner circumference of the brake disc. The disc is mounted to the axle hub by axially sliding the brake disc onto the hub's mating splines, followed by insertion and/or attachment of a variety of fasteners, brackets, etc., as necessary per the particular splined disc's design in order to secure the brake disc against axial movement off of the hub. When so mounted, the brake disc's tabs engage the hub's splines in a manner which permits the very large braking forces generated by the disc brake to be transferred to the axle hub and hence to the axle to slow the vehicle. This often requires costly precision machining of the spline/tab engagement surfaces.

Splined discs typically have had substantial metal-to-metal contact between the inner radial tabs of the brake disc and either the faces of the axle hub splines or intermediary inserts) that are used to transfer the braking loads from the disc tabs to the hub splines. The intermediate inserts are used in conjunction with hub axial rotor stop to axially restrain the brake disc on the axle hub. This metal-to-metal contact has the disadvantage of facilitating transfer of a large amount of brake heat from the brake disc directly to the axle hub. This is a particular problem where the axle hub is formed from Aluminum, a material which is being more frequently used for axle hubs in order to minimize vehicle weight and improve fuel economy.

Further, where intermediary disc-to-hub elements are used to locate and transfer brake forces, these typically stainless steel elements add to manufacturing costs and are subjected to braking force loads that are high enough to approach the material's durability limits. The excessive heat transferred to the intermediary elements also can raise the temperatures of these elements to a point that long-term strength and fatigue life may be adversely affected.

In order to address these and other problems with brake disc mounting in the prior art, the present invention provides a disc mounting arrangement that minimizes heat transfer from the brake disk to the axle hub, eliminates the need for a large number of individual intermediary disc-to-hub elements, is simply to assemble and disassemble to install and/or replace the brake disc, and is highly cost effective.

In one embodiment of the invention a pair of brake disc attachment rings, preferably formed from a high-strength material such as steel, are located on opposite sides of the brake disc, overlapping the brake disc tabs and the corresponding axle hub splines. The rings are connected to one another by fasteners that pass between the brake disc tabs, and fasteners that pass through the axle hub splines. This arrangement provides a positive connection between the brake disk and the axle hub for the transfer of braking forces from the disc to the hub via the attachment rings, while permitting the hub brake disc and the axle hub to be thermally decoupled from one another by eliminating substantial metal-to metal contact between the brake disc tabs and the axle hub splines as in the prior art. Preferably, the arrangement completely eliminates contact between the brake disc tabs and the axle hub splines. The attachment rings may be sized such that they possess sufficient strength in the circumferential direction to maintain the brake disc tab/axle hub spline separation, yet are thin enough to present only a relatively narrow cross-section for heat transfer from the tabs to the splines. The rings may be formed by well-known processes, such as stamping.

This arrangement also eliminates the need for a plurality of individual, highly-stressed intermediate fixing devices to join the brake disc to the axle hub, simplifying disc installation and removal and reducing costs. For example, the inventive brake disc mounting arrangement can replace one known complicated mounting design's 20 intermediate inserts, 10 spring elements and 10 fasteners with two relatively inexpensive steel attachment rings and 20 fastener and 10 mounting block assemblies.

In another embodiment of the invention, the attachment rings are provided with conical depressions at the fastener pass-through holes to receive correspondingly conically-shaped fastener heads and conical washers. The cone shapes may be deep enough to permit the fastener heads and/or conical washers to be flush to or below the surface of the attachment rings (i.e., "countersunk"), or may be shallower, such that the fastener heads and/or conical washers are raised above the surface of the attachment ring(s) (i.e., "stand proud" from the ring surface). If needed, the brake disc tabs and/or the axle hub splines may be provided with their own depressions that accommodate the attachment ring depressions so that the contact area between the attachment rings and the brake disc tabs and the axle hub splines are fully supported by the corresponding axial face of the tabs and/or splines.

Having such depressions in the attachment rings provides several advantages, including increasing the area of the load-bearing interface between the attachment rings and the fasteners, increasing the lateral and torsional stiffness of the attachment rings, decreasing shear loading of the fasteners (by permitting the depressions to assist in transfer of circumferential loads instead of relying solely on the fasteners to absorb all of the shear forces), and providing a brake disc/axle hub outer face that is relatively flat to accommodate adjacent components, such as a wheel hub flange without interference from the fasteners.

In a further embodiment, the tabs on the inner circumference of the brake disc may be reduced in thickness in order to accommodate rotor connection features therebetween to receive the fasteners securing the attachment rings to the brake disc. Preferably the connection features are in the form of a bushing block made from a material having a low coefficient of thermal conductivity. The bushing block may also be formed as a bushing insert provided with a metal outer shell.

One of ordinary skill in the art will recognize that the attachment ring depressions need not be conical, and may be any shape as long as the depression shape and the corresponding fasteners cooperate to provide at least partially axially-extending attachment ring surfaces that may assist the fasteners in transferring braking loads from the brake disc to the axle hub.

Other objects, advantages and novel features of the present invention will become apparent from the following detailed description of the invention when considered in conjunction with the accompanying drawings.

### BRIEF DESCRIPTION OF THE DRAWINGS

Figure 1 is an illustration of a vehicle axle carrying a disc brake in accordance with an embodiment of the present invention.
Figures 2a and 2b are oblique cross-section views of a brake disc mounting arrangement in accordance with an embodiment of the present invention.
Figures 3a and 3b are corresponding cross-section elevation views of the brake disc mounting arrangement of Figs. 2a and 2b.
Figure 4 is an elevation view of the brake disc of the preceding figures.
Figure 5 is an oblique cross-sectional view of the brake disc of the preceding figures through a plane perpendicular to the brake disc axis of rotation.
Figure 6 is an oblique view of the axle hub of the preceding figures.
Figure 7 is an elevation view of the brake disc of the preceding figures.
Figures 8a and 8b are oblique elevation and cross-section views, respectively, of the attachment rings of the preceding figures.
Figures 9a and 9b are oblique elevation and cross-section views, respectively, of the bushing blocks of the preceding figures.
Figures 10a and 10b are oblique elevation and cross-section views, respectively, of the bushing block shells of the preceding figures.

Common reference label numbers are used with common features in the figures.

### DETAILED DESCRIPTION OF THE DRAWINGS

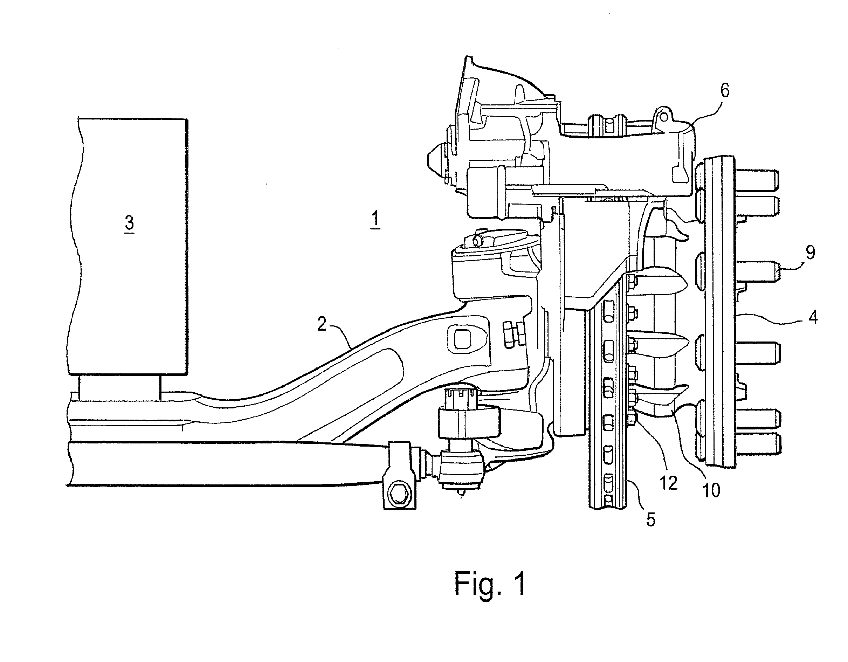

Figure 1 illustrates an end region of a vehicle axle 1, having a fixed axle portion 2 connected to the vehicle 3, a rotating axle hub 4, a brake disc 5 connected to the axle hub 4 in a non-rotational manner, and a brake caliper 6 mounted in this embodiment on the fixed axle portion 2 in a manner well known in the art, and thus not further illustrated.

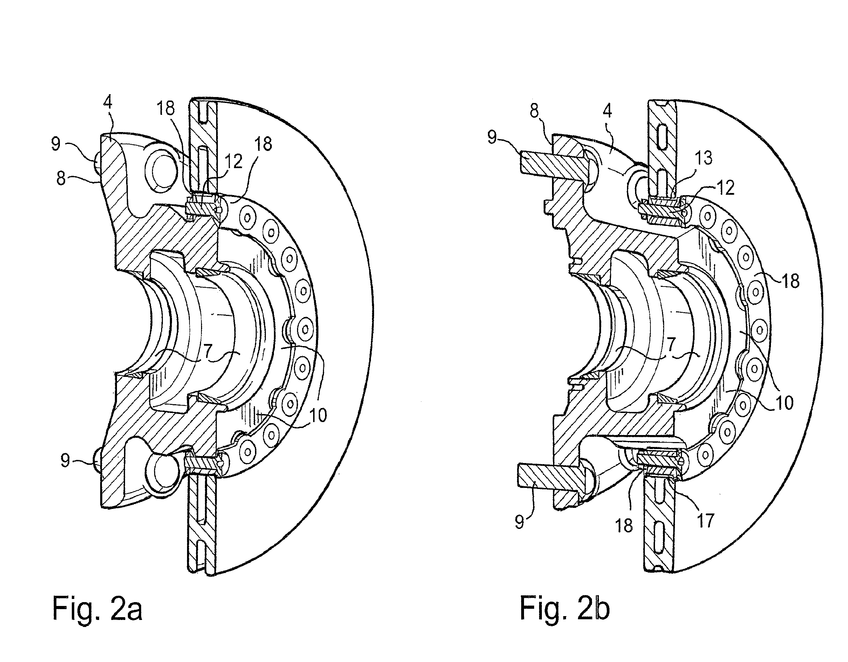

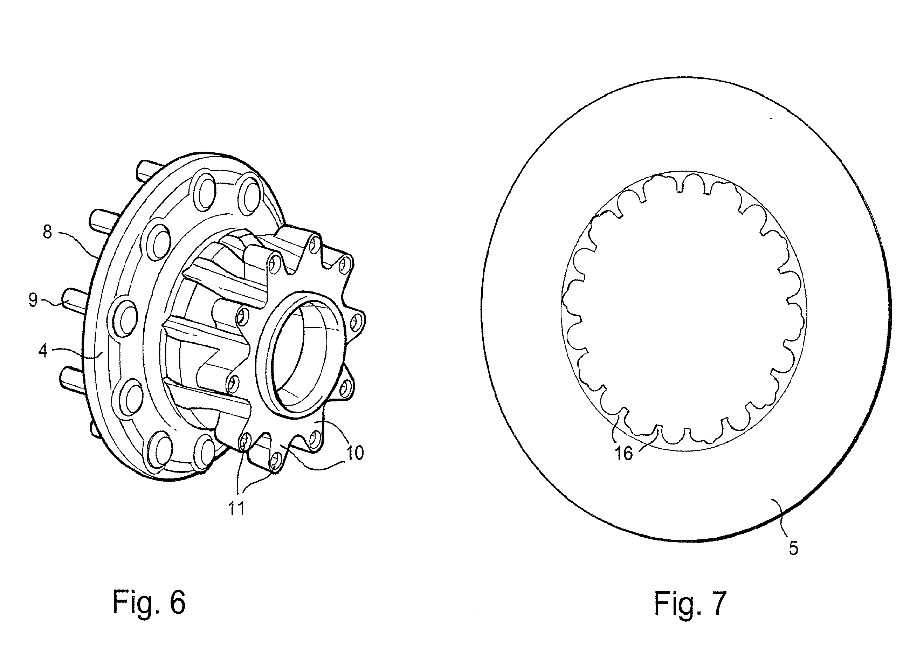

Figures 2a and 2b show cross-section views of a brake disc and hub mounting arrangement in accordance with an embodiment of the present invention. The axle hub 4 rotates on the end of the fixed axle portion 2 via wheel bearings, the outer races 7 of the bearing assemblies being illustrated in these figures. The axle hub 4 on its outer wheel-mounting face 8 carries a plurality of wheel mounting studs 9 arranged to receive a rim of a wheel (not illustrated). At the vehicle side of the axle hub 4 there are arranged circumferentially about the outer radius of the hub a plurality of axially-oriented splines 10. The axle hub 4 is illustrated by itself in Fig. 6.

Fig. 2a is a cross-section of the axle-hub and brake disc mounting arrangement taken at a location that passes through two of the axle hub splines 10, illustrating that each of the splines 10 includes a through-hole 11 (not shown in 2a) through which a mounting fastener 12 may pass. In this embodiment all of the splines 10 include a through-hole 11, however, not all of the splines need be provided with a through-hole and a fastener, and some or all of the splines may be provided with blind holes that are open to either the vehicle side or a wheel side of the axle hub 4.

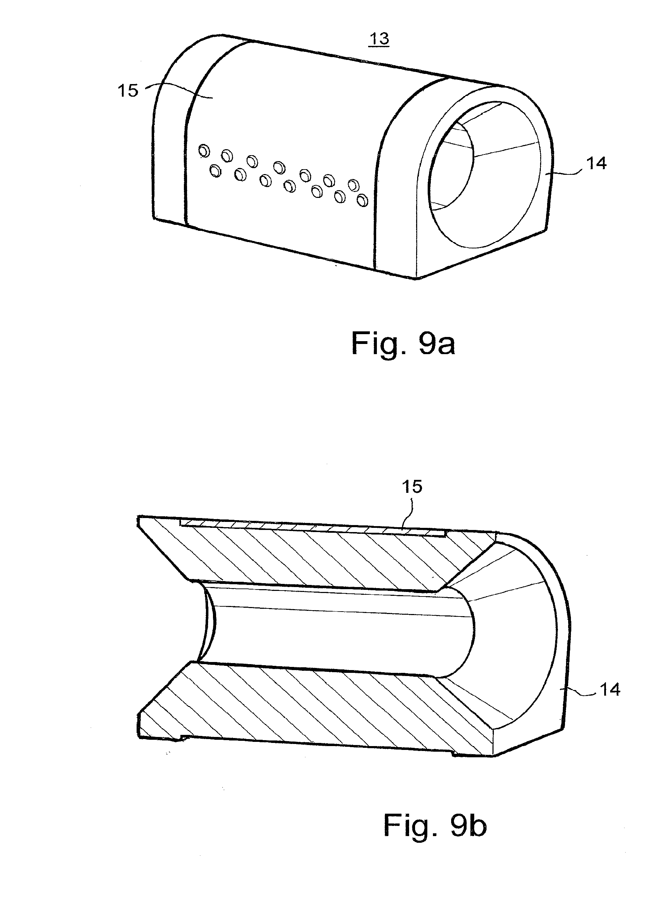

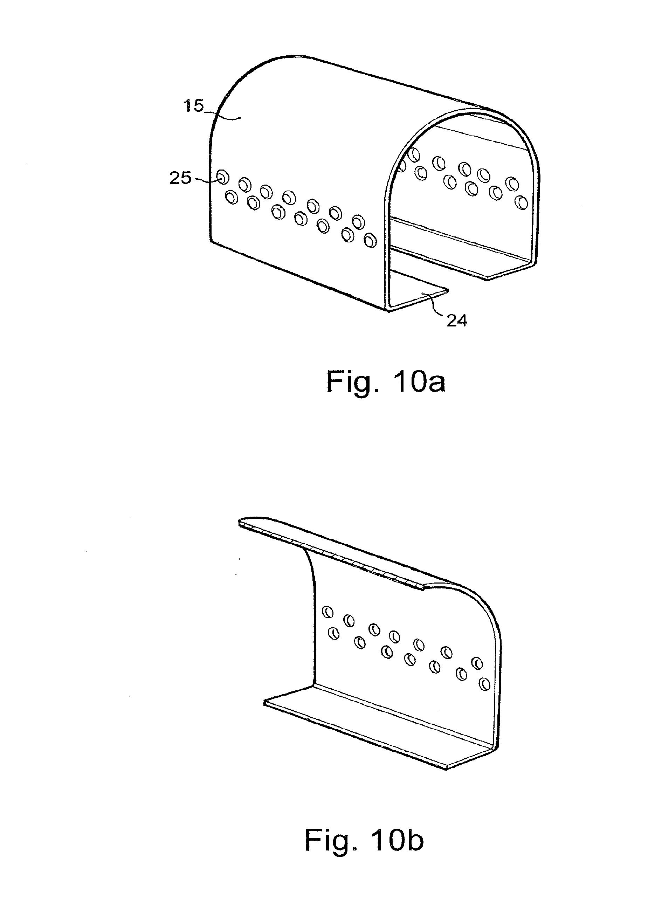

Fig. 2b similarly shows a cross-section of the axle-hub and brake disc mounting arrangement taken at a location that passes through two of brake disc 5 mounting elements, bushing blocks 13 (also referred to as mounting blocks). Each of the bushing blocks 13 in this embodiment includes a mounting insert 14 having an outer shell 15, as shown in Figs. 9 and 10. The bushing blocks 13 are positioned between the axle hub splines 10 and between radially-inward-oriented brake disc projections 16, as will be discussed further below. As in Fig. 2a, each of the bushing blocks 13 is provided with a through-hole 17 through which a mounting fastener 12 may pass, however, not every bushing block 13 is required to possess a through-hole 17 or completely penetrate the bushing block 13. Nor must a bushing block 13 be provided between every pair of axle hub splines 10, as long as the axle hub-to-brake disc connection is capable of withstanding the braking forces to be transferred from the brake disc 5 to the axle hub 4. The bushing block insert 14 and outer shell 15 may be formed from steel, preferably a spring steel for the outer shell 15, however the present invention is not limited to these materials as long as they are sufficiently strong to transfer braking forces from the brake disc's radially-inner projections 16 (not shown) though the fasteners 12 to the splines 10.

In this embodiment the fasteners 12 capture a pair of mounting rings 18 having a plurality of fastener-receiving holes on both sides of the axle hub splines 10, the bushing blocks 13 and radially inner brake disc projections 16, thereby limiting axial motion of the bushing blocks 13 and the brake disc 5 relative to the axle hub splines 10. The brake disc projections 16 are illustrated in the elevation view of the brake disc 5 by itself in Fig. 7.

The mounting rings 18 in this embodiment are formed from steel, however the present invention is not limited to this material, as any material sufficiently strong to transfer braking forces from the bushing blocks 13 to the splines 10 may be used. The mounting rings 18 also are not required to have a fastener receiving hole at every axle spline 10 and/or every bushing block 13, as long as the axle hub-to-brake disc mounting arrangement is sufficiently strong to transfer braking forces from the brake disc 5 to the axle hub 4.

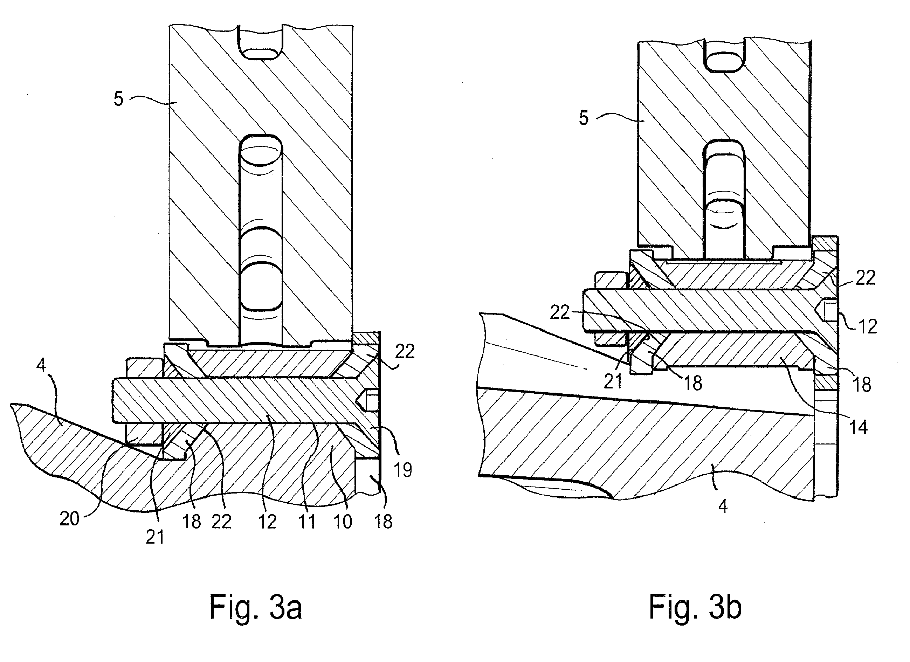

Figures 3a and 3b are detailed cross-section elevation views of the brake disc mounting arrangement of Figs. 2a and 2b. Fig. 3a shows the through-hole 11 of a spline 10 through which a fastener 12 is arranged, with the rings 18 captured under the head 19 of the fastener 12 on one side of the brake disc 5 and under a fastener such as a nut 20 and a washer 21 on the opposite side of the brake disc 5. Fasteners other than a bolt and a nut may be used, such as screws or rivets, as long as the fasteners are sufficiently strong to transfer braking forces from the rings 18 to the axle hub splines 10.

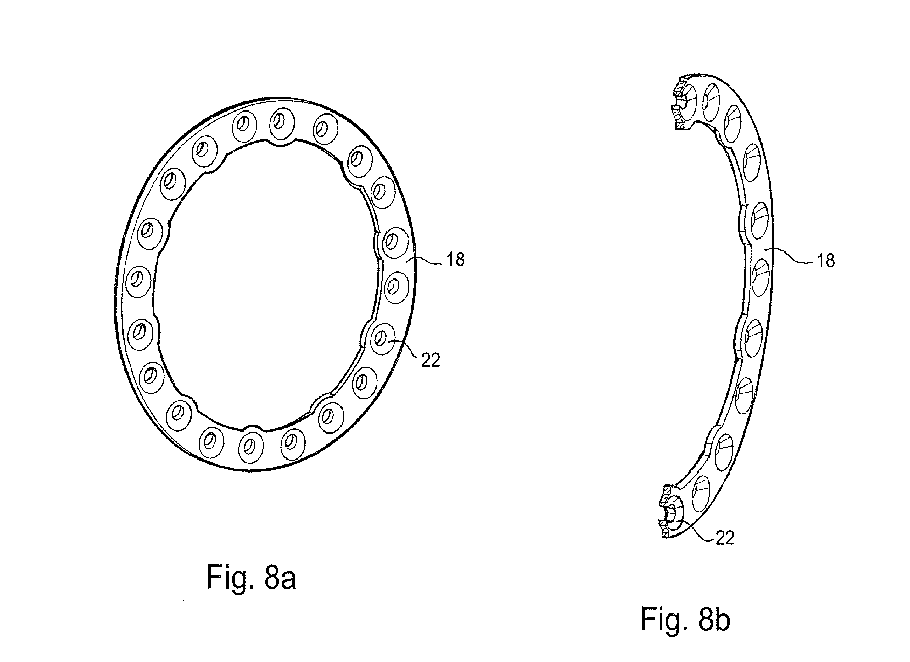

Preferably the rings 18 are formed with axially-oriented projections on an inward-facing side at each fastener hole location, such as the conical depressions 22 on an outward-facing side, in order to increase the surface area of the load-bearing surface of the ring-to-fastener and ring-to-spline (or bushing block) interface, in cooperation with corresponding shapes of the underside of fastener head (e.g., use of a counter-sunk bolt head), the washer 21, and the ring-contacting faces of the splines 10 (or bushing block inserts 14). Oblique views of the mounting ring 18 and depressions 22 are shown in Figs. 8a and 8b (complete and cross-section views, respectively). Such ring depressions also provide increased load-bearing surface in the circumferential direction. As compared to an arrangement in which rings are flat at their fastener-receiving holes, an arrangement that results in maximizing local shear stress under the head of the fastener, the axially-extending projections distribute the loading over a broader area to reduce the potential for shearing off the heads of the fasteners. The axial projections 22 are not limited to being conically-shaped, as long as the projections provide increased load-bearing and/or shear stress-reducing surface areas at the through holes 11, 17.

Fig. 3b shows the corresponding fastener arrangements at the bushing blocks 13, similarly with conical depressions 22 mating with the ring-contacting faces of the bushing block insert 14.

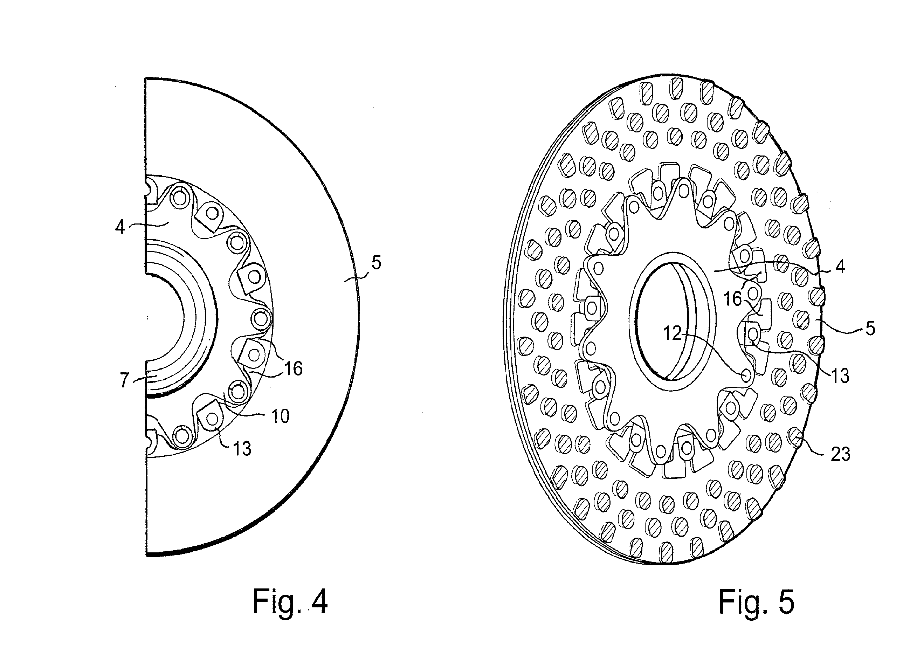

Fig.4 is an elevation view of the axle hub-to-brake disc mounting arrangement of Fig. 2a, 2b without the mounting ring 18, and Fig. 5 is an oblique cross-section view of this arrangement through a plane perpendicular to the hub's axis of rotation. In these views the alternating hub and disc features provided in this embodiment are visible, with axle hub splines 10 alternating between bushing blocks 13 about the circumference of the axle hub 4. Also visible in this view are the brake disc radially-inner projections 16 that abut the outer surfaces of both circumferentially-oriented (relative to the axis of rotation of the axle hub 4) sides of each bushing block 13 in order to transfer braking forces from the bake disc 5 to the bushing blocks 13 (which in turn transfer the braking forces to the bushing block fasteners 12 to the mounting rings 18 and thence to axle hub splines 10). Also visible are disc spacing bars 23 which separate the pair of friction surfaces of the internally-ventilated brake disc 5.

As shown particularly well in Fig. 5, neither the brake disc projections 16 nor the bushing blocks 13 have significant contact with the splines 10 to which the projections and the blocks are adjacent, yet the braking forces generated by application of the brake are still able to be transferred from the brake disc 5 to the axle hub 4, *i.e.,* from the brake disc projections 16 to the circumferential sides of the bushing blocks 13, from the bushing blocks 13 to their respective fasteners 12, from the bushing block fasteners 12 to the mounting rings 18, from the rings 18 to the axle hub spline fasteners 12, from the spline fasteners 12 to the splines 10, and from the splines 10 into the axle hub 4.

The present invention thus provides a brake disc-to-hub mounting arrangements that is sufficiently strong and durable to reliably transfer braking forces to the axle hub, while substantially reducing the amount of heat transfer from the brake disc to the axle hub by effectively isolating the axle hub from direct contact with the brake disc. The limitation of heat transfer may be enhanced by using a material in bushing block insert 14 with a low heat transfer coefficient. The invention also provides a brake disc-to-axle hub mounting arrangement that is well suited for installation and exchange in the field by technicians, requiring removal of fewer fasteners and providing easy alignment of the brake disc, splines, mounting rings and bushing blocks during reassembly, as well as only requiring replacement of the brake disc itself, thereby reducing maintenance part and labor costs and minimizing vehicle down time.

The bushing blocks 13 of the embodiment shown in the figures are illustrated in greater detail in Figs. 9a-9b. Fig. 9a shows the assembled bushing block 13, including the insert 14 and the outer shell 15, and the conical face shapes arranged to engage the conical depressions 22 of the mounting rings 18. Fig. 9b shows this bushing block in cross-section view, where it is easier to see the conical face surface of the opposite end of the insert 14, as well as the axial length of the outer shell 15 being shorter than the axial length of the insert 14, thereby ensuring the outer shell 15 does not contact the mounting rings 18 and interfering with the intimate contact between the insert 14 and the ring depressions 18. In this embodiment, the outer shell 15 is a steel component that is provided to serve as a spring member that takes up excess play between adjacent brake disc projections 16. The outer shell 15 may also be used to minimize wear between the brake disc radially inner projections 16 and the bushing block insert 14 during transfer of braking forces from the brake disc 5 to the bushing block, however, it is not necessary to include such a protective shell for this purpose if the insert 14 is sufficiently strong to receive the braking forces from the brake disc 5 without substantial wear or deformation.

Figs. 10a shows the outer shell 15 in this embodiment by itself, showing that the outer shell 15 need not fully enclose the insert 14, particularly in a region which is not in contact with an adjacent component, such as the side facing the axle hub, shown here for example by the shell legs 24 that serve to retain the shell 15 on the insert 14, while also allowing the shell 15 to be readily spread apart to receive the insert 14 during assembly of the bushing block 13. The outer shell 15 may also be provided with surface features 25 that may assist in retaining the insert 14 as well as minimizing outer shell 15 wear during service. Fig. 10b shows a cross-section view of the outer shell 15.

In use, the present embodiment of the invention may be assembled by locating the mounting ring 18 that will be closest to the wheel mounting face 8 of the axle hub 4, preassembling the mounting ring 18 that will be farthest from the wheel mounting face 8 to the brake disk 5 and bushing blocks 13 using at least some of the fasteners 12, locating the brake disc 5 onto the axle hub 4 while passing the fasteners 12 into the corresponding axle spline holes 11, moving the mounting ring 18 previously located on the axle hub 4 onto the ends of the fasteners 12, and securing the fasteners (as well as installing any remaining fasteners) to secure the brake disc 5 to the axle hub 4.

The foregoing disclosure has been set forth merely to illustrate the invention and is not intended to be limiting. For example, the axle hub need not be arranged with splines having spaces between adjacent splines to receive bushing blocks, nor must the mounting rings have holes about the circumference of the rings that are all at the same radius, *e.g.,* the brake disc mounting region of the hub may be generally cylindrical, with the bushing blocks being positioned outside the hub radius and the mounting rings being radially wide enough for fasteners to be located in two rows, one row aligned with the hub and the other row aligned with the bushing blocks. In another embodiment only one mounting ring may be provided if sufficiently strong and resistant to twisting to hold the brake disc in proper alignment with the axle hub during brake application. In a further embodiment, if the highest level of heat transfer isolation is not required, the bearing blocks may be dispensed with entirely and the brake disc provided with holes at its radially inner periphery to receive fasteners passing through the mounting rings, thereby minimizing component costs and simplifying assembly of the brake disc to the axle hub. In another embodiment, the mounting ring depressions may be another geometric shape such as a square, a hexagon, a truncated pyramid, a plane parallel to the rotation axis of the hub, as long as the shape is axially-extending to aid in reduction of shear stress. Because other such modifications of the disclosed embodiments incorporating the spirit and substance of the invention may occur to persons skilled in the art, the invention should be construed to include everything within the scope of the appended claims and equivalents thereof.

### Listing of reference labels:

- 1: axle
- 2: fixed axle portion
- 3: vehicle
- 4: axle hub
- 5: brake disc
- 6: brake caliper
- 7: outer bearing race
- 8: axle hub wheel-mounting face
- 9: wheel mounting stud
- 10: spline
- 11: spline through-hole
- 12: fastener
- 13: bushing block
- 14: mounting block insert
- 15: mounting block outer shell
- 16: projections
- 17: bushing block through-hole
- 18: mounting ring
- 19: fastener head
- 20: nut
- 21: washer
- 22: axially-oriented ring hole depression
- 23: brake disc spacing bar
- 24: outer shell legs
- 25: outer shell surface features

## Claims

1. A brake disc mounting arrangement, comprising:
a brake disc;
at least one mounting ring; and
a plurality of fasteners;
wherein
the brake disc is configured to be mounted onto an axle hub, the axle hub including a plurality of holes aligned parallel to an axis of rotation of the axle hub, the axle hub holes being circumferentially arranged about the axle hub and each of the plurality of axle hub holes being configured to receive one of the plurality of fasteners,
the brake disc includes a plurality of brake disc connection features aligned parallel to the axis of rotation of the brake disc, the plurality of brake disc connection features being circumferentially arranged about a radially inner region of the brake disc and each of the plurality of brake disc connection features including a mounting hole configured to receive one of the plurality of fasteners,
the at least one mounting ring includes a plurality of ring holes circumferentially arranged about the at least one mounting ring at locations corresponding to radial locations of the plurality of axle hub holes and the plurality of brake disc mounting holes,
when in an installed position the brake disc is circumferentially fixed relative to the axle hub by the plurality of fasteners passing through the ring holes of the at least one mounting ring into the plurality of axle hub holes and the plurality of brake disc mounting holes, and
none of the plurality of fasteners passes through both one of the plurality of axle hub holes and one of the plurality of brake disc mounting holes.

2. The brake disc mounting arrangement of claim 1, wherein
the at least one mounting ring includes two mounting rings,
when in the installed position, one of the two mounting rings is located on a first side of the brake disc and the other of the two mounting rings is located on an opposite side of the brake disc, and
each of the plurality of fasteners passes through at least one of the two mounting rings.

3. The brake disc mounting arrangement of claim 2, wherein
at least one of the two mounting rings includes at least one axially-oriented depression about at least one of the plurality of ring holes,
for each of the at least one axially-oriented depressions a corresponding fastener of the plurality of fasteners includes a fastener head having a shape corresponding to a shape of the axially-oriented depression, and
for each of the at least one axially-oriented depressions a corresponding one of the plurality of axle hub holes and the plurality of brake disc mounting holes includes a shape corresponding to the shape of the axially-oriented depression.

4. The brake disc mounting arrangement of claim 3, wherein
all of the plurality of ring holes have one of the at least one axially-oriented depressions.

5. The brake disc mounting arrangement of claim 2, wherein
each of the plurality of axle hub holes is located in a corresponding one of a plurality of axle hub splines arranged circumferentially about the axle hub.

6. The brake disc mounting arrangement of claim 3, wherein
each of the plurality of axle hub holes is located in a corresponding one of a plurality of axle hub splines arranged circumferentially about the axle hub.

7. The brake disc mounting arrangement of claim 6, wherein
the plurality of axle hub splines are spaced apart a distance sufficient to permit at least a portion of one of the plurality of brake disc connection features to be located between an adjacent pair of the axle hub splines.

8. The brake disc mounting arrangement of claim 7, wherein
the plurality of brake disc connection features includes at least one of a plurality of brake disc holes through the brake disc and a plurality of bushing blocks each configured to be located circumferentially between adjacent projections of the brake disc oriented radially inward.

9. The brake disc mounting arrangement of claim 7, wherein
the plurality of brake disc connection features includes a plurality of bushing blocks each configured to be located circumferentially between adjacent projections of the brake disc oriented radially inward.

10. The brake disc mounting arrangement of claim 9, wherein
each of the plurality of bushing blocks includes a bushing block insert having the brake disc connection feature mounting hole.

11. The brake disc mounting arrangement of claim 10, wherein
each of the plurality of bushing blocks includes an outer shell covering at least circumferentially-oriented surfaces of each bushing block insert.

12. An axle assembly, comprising:
a vehicle axle;
an axle hub rotatably located on the vehicle axle;
a brake disc;
at least one mounting ring; and
a plurality of fasteners;
wherein
the axle hub includes a plurality of holes aligned parallel to an axis of rotation of the axle hub, the axle hub holes being circumferentially arranged about the axle hub and each of the plurality of axle hub holes being configured to receive one of the plurality of fasteners,
the brake disc includes a plurality of brake disc connection features aligned parallel to the axis of rotation of the brake disc, the plurality of brake disc connection features being circumferentially arranged about a radially inner region of the brake disc and each of the plurality of brake disc connection features including a mounting hole configured to receive one of the plurality of fasteners,
the at least one mounting ring includes a plurality of ring holes circumferentially arranged about the at least one mounting ring at locations corresponding to radial locations of the plurality of axle hub holes and the plurality of brake disc mounting holes,
when in an installed position the brake disc is circumferentially fixed relative to the axle hub by the plurality of fasteners passing through the ring holes of the at least one mounting ring into the plurality of axle hub holes and the plurality of brake disc mounting holes, and
none of the plurality of fasteners passes through both one of the plurality of axle hub holes and one of the plurality of brake disc mounting holes.

13. A method of mounting a brake disc onto an axle hub, comprising the acts of:
locating the brake disc on the axle hub;
locating at least one brake disc mounting ring adjacent to a plurality of brake disc connection features at a radially inner region of the brake disc having a plurality of mounting holes and a plurality of axle hub holes in the axle hub arranged parallel to an axis of rotation of the axle hub; and
installing a plurality of fasteners through a plurality of holes in the at least one brake disc mounting ring corresponding to the plurality of axle hub holes and the plurality of brake disc mounting holes, where none of the plurality of fasteners passes through both one of the plurality of axle hub holes and one of the plurality of brake disc mounting holes.

14. The method of claim 13, wherein
the at least one mounting ring includes two mounting rings located on opposite sides of the brake disc,
the plurality of fasteners are installed through both of the two mounting rings, and
the plurality of brake disc connection features includes a plurality of bushing blocks,
further comprising the act of positioning each of the plurality of bushing blocks between adjacent projections of the brake disc oriented radially inward.

15. The method of claim 14, wherein
the plurality of bushing blocks and the brake disc are assembled with one of the two mounting rings and the plurality of fasteners prior to locating the brake disc on the axle hub.
